# EUROPEAN PATENT APPLICATION

(11) **EP 1 271 373 A2**
(43) Date of publication of application: **02.01.2003**
(21) Application number: 02011985.5
(22) Date of filing: 29.05.2002
(51) Int. Cl.: G06F 17/60, G06F 1/16, G06F 3/00

(54) **Information processing apparatus and method of loading and executing an add-in program in the same**

(30) Priority: 29.06.2001 JP 2001200136
(71) Applicant: Kabushiki Kaisha Toshiba, Tokyo 105-8001 (JP)
(72) Inventor: Hashimoto, Tatsuya, Minato-ku, Tokyo 105-8001 (JP); Noda, Kazushige, Minato-ku, Tokyo 105-8001 (JP)
(74) Representative: Henkel, Feiler, Hänzel

(57) **Abstract**

An information processing apparatus (10) stores in a function expansion card (20) removably housed in an expansion slot (7) add-in programs (201a,b,c) for reading additional information (a1) such as multimedia information included in the electronic mail (A). The apparatus (10) includes a list table (104) that correlates the individual information types of additional information with the add-in programs. In the apparatus (10), an add-in program execute section (105) loads the add-in program selected based on the list table (104) from the function expansion card (20) and executes the program. A user interface section (106) provides a screen for the user to arbitrarily set a correlation in the list table. An indicator display section (107) enables the user to visually check the list table.

## Description

This invention relates to an information processing apparatus which transmits and receives electronic mail via, for example, the Internet, and a method of starting up an add-in program in the apparatus. More particularly, this invention relates to an information processing apparatus which enables many add-in programs to be used and thereby various items of additional information to be browsed, even when the capacity of a storage unit built into the apparatus is limited, and to a method of starting up an add-in program in the apparatus.

In recent years, various types of communication services using, for example, the Internet have become available. Electronic mail, which enables users to transmit and receive documents easily between themselves, has become extraordinarily popular. Furthermore, the function of electronic mail has recently expanded such that not only text but also multimedia information (additional information), such as animation, is included in the function.

At first, the multimedia information was programmed, incorporated into mail, and then transmitted and received, with the result that the mail volume increased, and so the communication cost became higher. To overcome these problems, a method as disclosed in, for example, Jpn. Pat. Appln. KOKAI Publication No. 2000-305871 has been developed. In the method, both the transmission side and the reception side have various add-in programs for browsing additional information and transmit and receive only the additional information through the communication line, which enables the multimedia information to be transmitted and received without increasing the mail volume or increasing the communication costs.

As for battery-powered information processing apparatuses such as personal digital assistants (PDAs), making them easy to carry and assuring a longer' continuous operating time on a battery charge will possibly determine their value as products. Nowadays, they tend to consume less power and be compact and light. Consequently, it is more difficult to incorporate a large-capacity storage medium. This makes it impossible to hold a large number of add-in programs as disclosed in Jpn. Pat. Appln. KOKAI Publication No. 2000-305871.

Therefore, with lower power, more compact, and more lightweight information processing apparatuses of this type, only frequently-used add-in programs are stored in the memory of the device. Therefore, additional information that requires less frequently-used add-in programs has been unbrowsable.

Embodiments of the present invention provide an information processing apparatus which enables a large number of add-in programs to be used and thereby various items of additional information to be browsed, even when the capacity of a storage unit built into the apparatus is limited, and a method of executing an add-in program in the apparatus.

According to embodiments of the present invention, there is provided an information processing apparatus for electronic mail which includes additional information in a form other than text, the information processing apparatus having an expansion slot in which a function expansion card is removably housed, comprising a storage unit located on the function expansion card and configured to store add-in programs for browsing the additional information and an add-in program execute section configured to, when browsing the electronic mail, load an add-in program from the storage unit of the expansion card for browsing the additional information included in the electronic mail and for executing the add-in program.

In the information processing apparatus, add-in programs for browsing the additional information included in electronic mail are stored in the expansion card. By loading an add-in program from the expansion card as needed and executing the program, many add-in programs can be used even when the capacity of the storage medium built into the apparatus is limited, which enables various items of additional information to be browsed.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows the outward appearance of an information processing apparatus according to an embodiment of the present invention;
FIG. 2 shows the configuration of the body of the information processing apparatus according to an embodiment of the present invention;
FIG. 3 is a functional block diagram of an electronic mail system which operates in the information processing apparatus according to an embodiment of the present invention;
FIG. 4 shows an example of a list table included in the information processing apparatus according to an embodiment of the present invention;
FIG. 5 is a flowchart illustrating the procedure through which the information processing apparatus of the embodiment looks through the additional information included in the electronic mail according to an embodiment of the present invention;
FIG. 6 is a first view of a user interface screen provided by the information processing apparatus according to an embodiment of the present invention;
FIG. 7 is a second view of a user interface screen provided by the information processing apparatus according to an embodiment of the present invention;
FIG. 8 is a flowchart illustrating the procedure through which the information processing apparatus of the embodiment selects and sets an add-in program according to an embodiment of the present invention; and
FIG. 9 shows an example of a list representation of add-in programs in the information processing apparatus according to an embodiment of the present invention.

Hereinafter, referring to the accompanying drawings, an embodiment of the present invention will be explained.

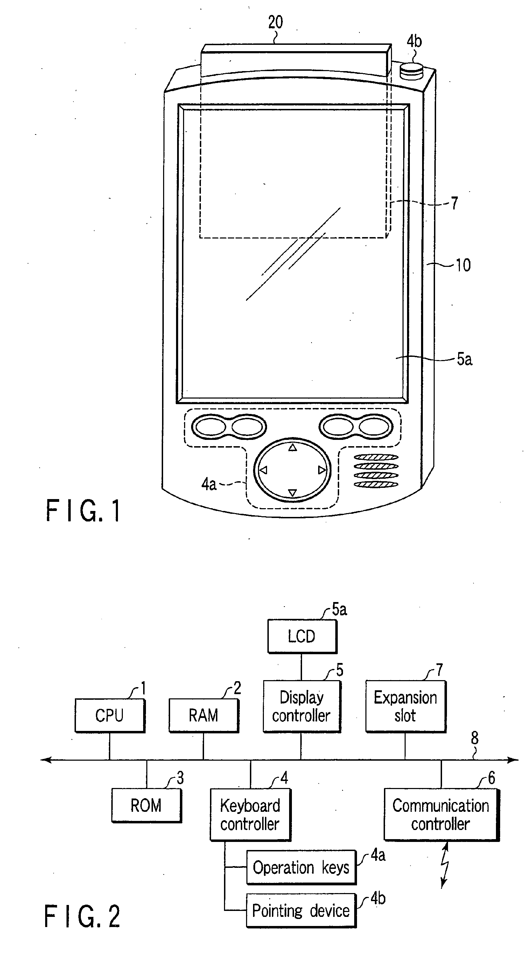

FIG. 1 shows the outward appearance of an information processing apparatus according to an embodiment of the present invention. As shown in FIG. 1, the information processing apparatus, which is a battery-powered portable information processing apparatus, such as a PDA, has a flat, plate-like body 10 suitable for use on the palm of the hand. An LCD 5a for displaying various items of information and operation keys 4a for specifying various operations are provided on the front of the body 10. In addition to the operation keys 4a, the information processing apparatus has a pen-type pointing device 4b for specifying various operations by pointing at arbitrary coordinates on the LCD 5a. The pen-type pointing device 4b is designed to be housed in the body 10, for example by being slid into a corresponding opening located in the top of the body 10 and adapted to receive the pen-type pointing device 4b.

The information processing apparatus is also provided with an expansion card 20 for expanding the function of the body 10. The body 10 includes an expansion slot 7 adapted to allow the expansion card 20 to be installed as needed.

FIG. 2 shows a block diagram of the configuration of the body 10 of the information processing apparatus according to an embodiment of the present invention.

As shown in FIG. 2, the body 10 of the information processing apparatus is provided with not only the operation keys 4a, pointing device 4b, LCD 5a, and expansion slot 7, but also a CPU 1, a RAM 2, a ROM 3, a keyboard controller 4, a display controller 5, and a communication controller 6. These are connected to one another via a bus 8.

The CPU 1, which controls the entire information processing apparatus, executes various data processes using the RAM 2 as a work area based on what has been written in the program stored in the ROM 3. The RAM 2 and ROM 3 are the storage units built into the information processing apparatus. Generally, the RAM 2 is used as a work area and the ROM 3 is used as a storage area for primary programs, such as, but not limited to, a mail application program.

The keyboard controller 4, which supervises input via the user interface in the information processing apparatus, transmits information entered by the operation keys 4a or the pointing device 4b to the CPU 1. The display controller 5, which supervises output via the user interface in the information processing apparatus, provides display control of the display data created by the CPU 1 on the LCD 5a.

The communication controller 6 transmits and receives data via a communication channel, such as the Internet, using a specific communication protocol.

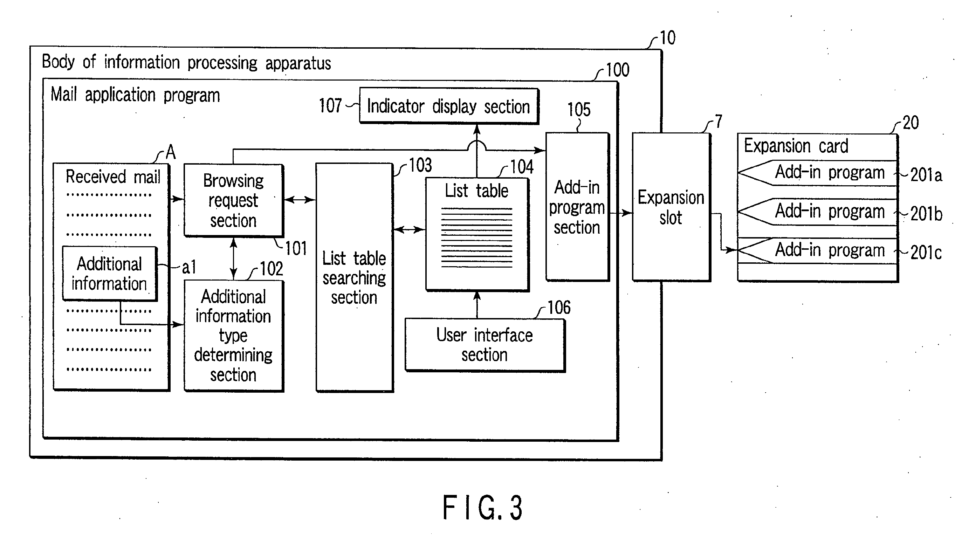

FIG. 3 is a functional block diagram of an electronic mail system which operates in the body of the information processing apparatus configured as described above.

The electronic mail system is configured in the form of a program which is stored in the RAM 2 or ROM 3 and executed by the CPU 1. A mail application program 100, the main part of the electronic mail system, is stored in the body 10 of the information processing apparatus. A plurality of add-in programs 201a to 201n to be incorporated into the mail application program 100 are stored in a storage unit located on an expansion card 20 which is inserted into an expansion slot 7 in the information processing apparatus 10 such that the card can be installed and removed freely.

It is assumed that received mail A exists and that the received mail A includes additional information a1 such as, but not limited to, multimedia information.

When the user performs an operation to browse the received mail A, a browsing request section 101 is initiated. After being initiated, the browsing request section 101 instructs an additional information type determining section 102 to determine the information type of the additional information that the user wants to browse and that is included in the received mail 10.

Receiving the instruction, the additional information type determining section 102 determines the information type of the additional information by, for example, analyzing the header part of the received mail A and returns the result of the determination to the browsing request section 101. Receiving the result, the browsing request section 101 then calls on a list table searching section 103 to determine which add-in program corresponds to the information type.

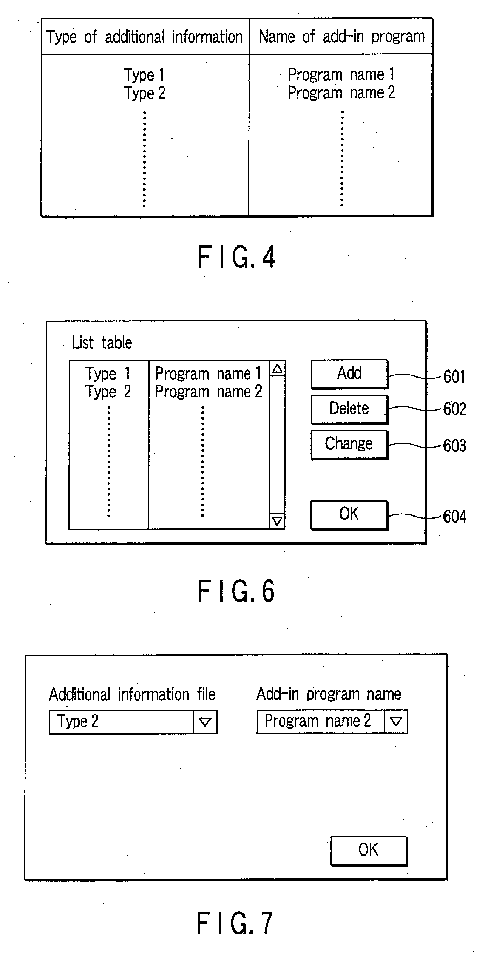

The add-in program that should be used to browse particular types of additional information (that is, the add-in program that corresponds to the information type) is set in a list table 104. By searching the list table 104, the list table searching section 103 determines the add-in program corresponding to the information type provided by the browsing request section 101. The list table searching section 103 returns the result of the search to the browsing request section 101. FIG. 4 shows an example of the list table 104.

Receiving the corresponding add-in program from the list table searching section 103, the browsing request section 101 instructs an add-in program execute section 105 to begin execution of the corresponding add-in program. Receiving the instruction, the add-in program execute section 105 loads the add-in program from the expansion card 20 into the RAM 2 in the body 10 of the information processing apparatus and begins execution of the program. At this time, the add-in program execute section 105 hands over the additional information as a parameter to the add-in program.

That is, the body 10 of the information processing apparatus loads a suitable program from the plurality of add-in programs 201a to 201n stored in the expansion card as needed and executes them, thus enabling a user to browse various types of additional information, even when the apparatus cannot incorporate into the body 10 a storage medium large enough to store all of the add-in programs 201a to 201n.

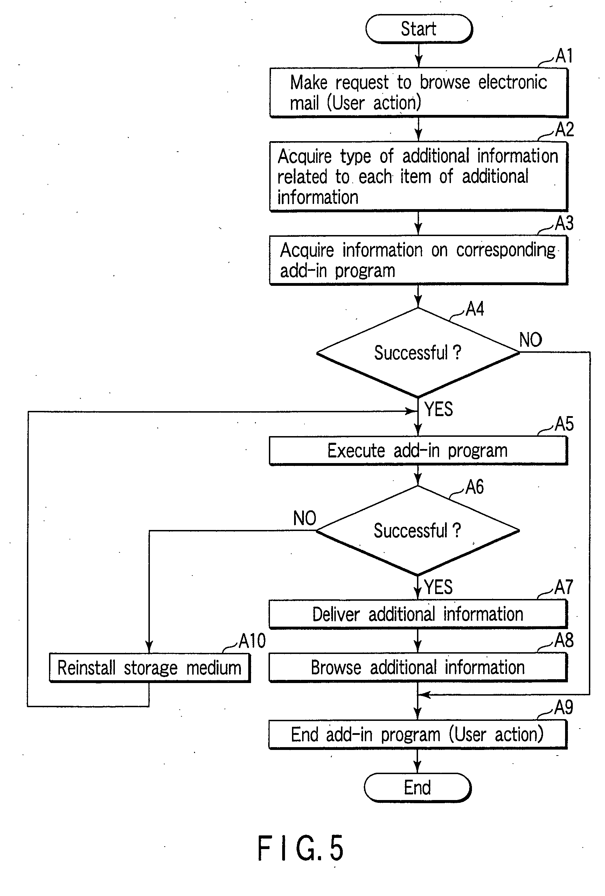

FIG. 5 is a flowchart illustrating the procedure through which embodiments of the information processing apparatus looks through the additional information included in the electronic mail.

When a request for browsing the received mail A is made (A1), the information processing apparatus acquires the information type of the additional information included in the received mail A for which a browsing request has been made (A2). After determining the information type, the apparatus retrieves a add-in program corresponding to the determined type for browsing the additional information (A3).

Having succeeded in determining the add-in program (YES in A4), the apparatus loads and executes the add-in program in the RAM 2 (A5). After properly beginning execution of the add-in program (YES in A6), the apparatus transfers the additional information for which the browsing request was received to the add-in program (A7), thus allowing the add-in program to browse that additional information (A8). The browsing of the additional information by the add-in program may then continue until the user specifies that browsing is complete (A9).

On the other hand, if the apparatus fails to successfully begin execution of the add-in program (NO in A6), something may be wrong with the expansion card. The user may then try to remove and reinstall the expansion card. After the expansion card in which the add-in program is stored is reinstalled in the expansion slot (A10), the apparatus may retry beginning execution of the add-in program (A5). In addition, if the apparatus fails to determine the add-in program (NO in A4), the user may not be able to browse the additional information.

As described above, even when the capacity of the storage medium built into the body is limited, the information processing apparatus enables a large number of add-in programs to be used, which makes it possible to browse various items of additional information.

Next, the function of the user interface section 106 will be explained. The user interface section 106 is provided so as to allow the user to arbitrarily set the list table 104 which provides a correlation between a particular type of additional information and an add-in program.

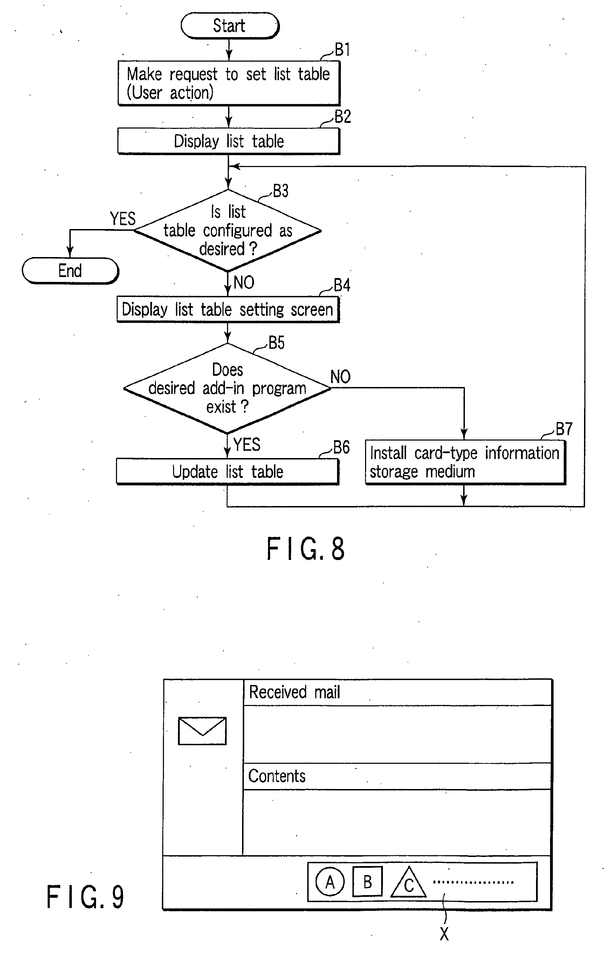

To enable the user to arbitrarily set the list table 104, the user interface section 106 provides setting screens such as, for example, those shown in FIGS. 6 and 7. When the user performs an operation to set the list table 104, the user interface section 106 displays the screen of FIG. 6. On the screen, the correlation of each type of additional information with an add-in program is displayed in table form according to the list table 104. The user may then add a new correlation using the "add" operator 601, delete an existing correlation using the "delete" operator 602, or change the present correlation using the "change" operator 603. As an example, it is assumed that a user wants to change the correlation between type 2 additional information and program name 2 of the add-in programs. The user may click or otherwise select the "change" operator 603. Then, the user interface section 106 displays the screen shown in FIG. 7.

Since all the add-in programs stored in the expansion card are shown on the screen, the user may select an add-in program to be newly correlated to type 2. The user interface section 106 accepts the change when the "OK" operator 604 is clicked or otherwise selected by the user. The change is then reflected in the list table 104. The user may then employ the newly correlated add-in program to browse various items of additional information having type 2.

FIG. 8 is a flowchart illustrating the procedure through which the information processing apparatus selects and sets an add-in program.

When a request for setting the list table 104 is made (B1), the information processing apparatus displays the contents of the list table 104 (B2) and repeats the following processes until the user is satisfied with the contents of the displayed list table 104 (YES in B3).

The user displays a setting screen for adding a new correlation or deleting or changing an existing correlation and performs the add, delete or change operations until the user is satisfied with the setting on the screen (B4). When the user correlates an add-in program with an information type, the information processing apparatus checks to see if the add-in program exists in the expansion card 20 (B5).

If the add-in program exists (YES in B5), the apparatus registers the add-in program in the list table 104 (B6). If the add-in program does not exist (NO in B5), the expansion card 20 in which the add-in program has been stored must be reinstalled in the expansion slot 7 (B7).

Providing the user interface section 106 enables the user to select add-in programs for browsing various items of additional information.

Next, the function of an indicator display section 107 will be explained. The indicator display section 107 is provided to enable the user to visually recognize the list table 104 which correlates the type of additional information with an add-in program.

To enable the user to visually recognize the list table 104, the indicator display section 107 secures a display area (X) for arranging icons representative of respective add-in programs at one end of the main screen for browsing the electronic mail and displays a list of the add-in programs as icons, as shown in FIG. 9. The list of add-in programs is not necessarily displayed all the time. For instance, the list may be displayed in a pop-up manner in response to, for example, a specific operation.

As described above, the information processing apparatus is provided with the indicator display section 107, which enables the user to visually recognize which add-in program has been selected.

In the explanation, the way of loading and beginning execution of the add-in program for browsing the additional information included in the electronic mail has been taken as an example. This method may be applied to a case where an application program for browsing, for example, attached files, is loaded from the expansion card as needed and then executed. Furthermore, the method may be applied to a case where HTML documents are to be browsed in place of electronic mail, and an application program for browsing the files representing the HTML documents is loaded from the expansion card as needed and is executed.

## Claims

1. An information processing apparatus connectable to an external expansion storage unit which stores add-in programs according to information type, said information processing apparatus **characterized by** comprising:
add-in program execute means (105) for, when browsing the information received through data communication, loading a add-in program from the external expansion storage unit according to the information type of said received information and to execute the add-in program.

2. The information processing apparatus according to claim 1, **characterized by** further comprising:
a list table (104) for managing a correspondence between an information type of the additional information and an add-in program;
additional information type determining means (102) for determining the information type of the additional information included in the received information; and
list table searching means (103) for searching said list table for a corresponding add-in program for browsing the additional information based on the information type determined by said additional information type determining means.

3. The information processing apparatus according to claim 2, **characterized by** further comprising:
user interface means (106) for setting the correspondence between the information type of the additional information and the at least one add-in program, the correspondence being managed by said list table.

4. The information processing apparatus according to claim 2, **characterized by** further comprising:
indicator display means (107) for showing the correspondence between the information type of the additional information and the at least one add-in program, the correspondence being managed by said list table.

5. The information processing apparatus according to claim 1, **characterized by** further comprising:
an expansion slot (7) for removably housing the external expansion storage unit.

6. The information processing apparatus according to claim 5, **characterized in that**
said external expansion storage unit is a function expansion card.

7. The information processing apparatus according to claim 1, **characterized in that**
said received information is an electronic mail.

8. In an information processing apparatus for transmitting and receiving electronic mail which includes additional information in a form other than text form and which has an expansion slot in which a function expansion card which includes a storage unit is removably housed, a method of executing an add-in program, said method **characterized by** comprising:
a step (A5) of loading the add-in program from the storage unit of the function expansion card for browsing the additional information included in the electronic mail and executing the add-in program when browsing an electronic mail.

9. The method of executing an add-in program according to claim 8, **characterized by** further comprising:
a step (A2) of determining the information type of the additional information included in the electronic mail; and
a step (A3) of searching a list table which manages a correspondence between an information type of the additional information and an add-in program for a corresponding add-in program for browsing the additional information based on the determined information type.
